**Europäisches Patentamt**

**European Patent Office**

**Office européen des brevets**

(11) Veröffentlichungsnummer: **0 159 751**
A1

# (12) EUROPÄISCHE PATENTANMELDUNG

(21) Anmeldenummer: **85200518.0**

(22) Anmeldetag: **04.04.85**

(51) Int. Cl.⁴: **B 01 J 3/02**, B 65 G 53/14

(30) Priorität: **12.04.84 DE 3413750**

(43) Veröffentlichungstag der Anmeldung: **30.10.85**
**Patentblatt 85/44**

(84) Benannte Vertragsstaaten: **AT CH DE FR GB IT LI NL SE**

(71) Anmelder: **METALLGESELLSCHAFT AG,**
**Reuterweg 14 Postfach 3724, D-6000 Frankfurt/M.1 (DE)**

(72) Erfinder: **Ackermann, Egon, Parcusstrasse 10,**
**D-6500 Mainz 1 (DE)**
Erfinder: **Gärtner, Rüdiger, Kuelsheimer Strasse 3,**
**D-6800 Mannheim 51 (DE)**

(74) Vertreter: **Rieger, Harald, Dr., Reuterweg 14,**
**D-6000 Frankfurt am Main (DE)**

(54) Vorrichtung zum Austragen von feinkörnigem Material.

(57) Die Vorrichtung zum Austragen von feinkörnigem Material aus einem System mit höherem Druck in einen Aufnahmeraum mit niedrigerem Druck besteht aus einem U-förmigen Tauchverschluss 1 mit einer Materialzuleitung 2 von dem System mit höherem Druck zu dem Einlaufschenkel 3, einem Materialaustritt 4 aus dem kürzeren Austragsschenkel 5 in den Aufnahmeraum mit niedrigerem Druck, einer Zuleitung 6 für Fördergas in das Material im unteren Teil des Tauchverschlusses 1, einer Verschlussvorrichtung 7 zum Öffnen und Schliessen des Materialaustritts 4 und einer Ausstattung der Verschlussvorrichtung 7 mit einer gegen die Förderrichtung wirkenden Kraft, die etwas grösser ist als die Kraft, die vom Druck im System auf die Verschlussvorrichtung in Förderrichtung ausgeübt wird.

0159751

METALLGESELLSCHAFT
Aktiengesellschaft
6000 Frankfurt/M.1

11. April 1984
SCHR/LWÜ/1585P

Prov. Nr. 9041 LC

## Vorrichtung zum Austragen von feinkörnigem Material

Die Erfindung betrifft eine Vorrichtung zum Austragen von
feinkörnigem Material aus einem System mit höherem Druck in
einen Aufnahmeraum mit niedrigerem Druck, bestehend aus einem
U-förmigen Tauchverschluß, einer Materialzuleitung von dem
System mit höherem Druck zu dem Einlaufschenkel und einem
Materialaustritt aus dem Austragsschenkel des U-förmigen
Tauchverschlusses in den Aufnahmeraum mit niedrigerem Druck,
und einer Zuleitung für Fördergas in das Material im unteren
Teil des Tauchverschlusses.

In vielen Fällen muß feinkörniges Material in der Weise aus
solchen Systemen ausgetragen werden, daß keine Reaktionsgase
aus dem System entweichen oder keine Gase in das System einströmen können. Wenn ein feinkörniges Material vorliegt, das
einen genau definierten Böschungswinkel bildet, kann dieses
Material die Austragsvorrichtung weitgehend abdichten, wenn
genügend Material in der Austragsvorrichtung ständig vorhanden
ist. Wenn das Material fließende Eigenschaften aufweist, dann
kann auch beim Vorhandensein von Material in der Austragsvorrichtung die dichtende Wirkung fehlen. In beiden Fällen wird
keine dichtende Wirkung durch das Material erzielt, wenn zu
wenig oder kein Material in der Austragsvorrichtung vorhanden
ist. Bei Material mit fließenden Eigenschaften ist außerdem
ein dosierter und kontrollierter Austrag oft nicht möglich.

Aus der DE-PS 915 199 ist eine Austragsvorrichtung bekannt,
bei der zwischen zwei Räumen mit unterschiedlichem Druck ein
Kanal mit vergleichswise geringem Durchmesser angeordnet ist,
der Kanal am Austrittsende von einer gewichtsbelasteten Klappe
verschlossen ist, ein Vorschubkolben Material in verdichetem
Zustand in den Kanal drückt, die Klappe durch das vorgeschobene Material geöffnet wird, eine entspechende Menge Material
aus dem Austrittsende herausfällt und dann das Austrittsende
wieder durch die Klappe geschlossen wird.

Aus der DE-AS 11 21 545 ist eine Austragsvorrichtung bekann,
bei der das abdichtende Teil aus einer Zellenradschleuse
besteht, die das Material durch eine Zuleitung zu einem Heberohr austrägt, in dem eine pneumatische Förderung erfolgt.

Diese Arten von Austragsvorrichtung sind mechanischem Verschleiß unterwurfen, und es können je nach Beschaffenheit des
Materials Verstopfungen auftreten.

Aus der US-PS 2 833 622 ist eine Austragsvorrichtung bekannt,
die aus einem U-förmigen Tauchtopf besteht. In einen Schenkel
mündet der Zulauf für das Material aus einem Zyklon, der mit
einer Wirbelschicht in Verbindung steht. Der andere Schenkel
hat im oberen Teil eine Austragsöffnung für das Material, das
in einen Behälter fällt. Oberhalb des Bodens des U-förmigen
Tauchtopfes ist eine Zuleitung für ein Fördergas angeordnet.
Das Fördergas transportiert das Material in den Austragsschenkel nach oben und durch die Austragsöffnung aus dem Tauchverschluß heraus. Diese Austragsvorrichtung dichtet nur ab, wenn
Material im Tauchverschluß vorhanden ist und wenn bei einem
Material mit fließenden Eigenschaften der höhere Druck im
System nicht alleine schon einen Austrag bewirkt. Im letzteren
Fall wird außerdem die Austragsmenge stark von dem im System
herrschenden Druck beeinflußt.

Der Erfindung liegt die Aufgabe zugrunde, eine Austragsvorrichtung zu schaffen, die den Austrag von feinkörnigem Material, auch von Material mit fließenden Eigenschaften, aus einem System mit höherem Druck in einen Aufnahmeraum mit niedrigerem Druck ermöglicht, wobei die Austragsvorrichtung nicht zu Verstopfungen neigt, einen geringen Verschleiß hat, eine Steuerung der Austragsmenge in einfacher und genauer Weise möglich ist und das Ausströmen von Gasen aus dem System vermieden wird, auch wenn kein Material in der Austragsvorrichtung vorhanden ist.

Die Lösung dieser Aufgabe erfolgt erfindungsgemäß dadurch, daß der Austragsschenkel kürzer ausgebildet ist als der Einlaufschenkel, eine Verschlußvorrichtung zum Öffnen und Schließen des Materialaustritts des Austragsschenkels angeordnet ist, und die Verschlußvorrichtung mit einer gegen die Förderrichtung wirkenden Kraft ausgestattet ist, die etwas größer ist als die Kraft, die vom Druck im System auf die Verschlußvorrichtung in Förderrichtung ausgeübt wird.

Unter dem Begriff "System mit höherem Druck" ist jedes Aggregat zu verstehen, in dem feinkörniges Material behandelt wird und das gegenüber dem Aufnahmeraum für das behandelte Material einen höheren Druck aufweist, wie z.B. Wirbelschicht-Verfahren. Unter den Begriff "Aufnahmeraum" ist jedes Aggregat zu verstehen, das einen niedrigeren Druck hat als das System, z.B. ein Bunker, ein Transportband, ein Transportgefäß usw. Der Druckunterschied zwischen dem System und dem Aufnahmeraum kann sehr niedrig sein, z.B. 0,5 mbar, er kann aber auch beträchtlich größer sein, z.B. 10 mbar oder höher. Die Zuleitung für das Fördergas wird so angeordnet, daß sie im betriebslosen Zustand in das Materialbett im unteren Teil des Tauchverschlusses mündet und daß sie entweder in Richtung des Austragsschenkels oder direkt in diesen Schenkel gerichtet ist. Der Austragsschenkel ist etwa 10 - 40 % kürzer als der



- 4 -

0159751

Einlaufschenkel. Die Höhe der Materialsäule in dem Einlaufschenkel mit der Materialzuleitung soll so groß sein,daß sie
das System gegen den Aufnahmeraum abdichtet. Die auf die Verschlußvorrichtung gegen die Förderrichtung wirkende Kraft wird
so bemessen, daß sie den Materialaustritt gegen den Druck im
System gerade verschließt. Wenn im Tauchverschluß kein
Material oder wenig Material vorhanden ist, wird der Materialaustritt durch die Verschlußvorrichtung geschlossen und es
kann kein Gas aus dem System austreten. Dieses Schließen
erfolgt in diesem Fall selbst dann, wenn Fördergas eingeleitet
wird, weil dann praktisch keine Erhöhung des Druckes eintritt.
Wenn der Einlaufschenkel des Tauchverschlusses mit Material
gefüllt ist, ist der Materialaustritt ebenfalls verschlossen,
solange kein Fördergas eingeleitet wird. Wenn Fördergas eingeleitet wird, wird die Verschlußvorrichtung durch den im Austragsschenkel auftretenden Druck geöffnet und Material mit dem
Fördergas aus dem Materialaustritt ausgetragen. Die auf die
Verschlußvorrichtung gegen die Förderrichtung wirkende Kraft
kann pneumatisch, mechanisch oder elektrisch bewirkt werden.
der Materialaustritt kann nach oben oder zur Seite hin angeordnet sein.

Eine vorzugsweise Ausgestaltung besteht darin, daß die Verschlußvorrichtung aus einer Platte besteht, die den Materialaustritt verschließt, und die Platte an einer beweglichen Kolbenstange befestigt ist. Die Platte kann als ebene Fläche oder
konisch mit der Spitze gegen die Förderrichtung ausgebildet
sein. Die konische Ausbildung ist insbesondere vorteilhaft,
wenn der Materialaustritt vertikal nach oben gerichtet ist.
Das Ende des Austragsschenkels am Materialaustritt wird vorzugsweise als Wulst ausgebildet, da dadurch der Abschluß verbessert wird. Durch die Ausbildung als Platte mit Kolbenstange
wird eine gute Führung der Verschlußvorrichtung erzielt.

Eine vorzugsweise Ausgestaltung besteht darin, daß die Kolbenstange an einer Membran befestigt ist, die Membran in einem Druckgehäuse angeordnet ist, und in den äußeren Teil des Druckgehäuses ein Druckmittel eingeleitet wird. Das Druckmittel kann aus einem Gas oder einer Flüssigkeit bestehen. Dadurch kann in einfacher Weise die erforderliche Kraft auf die Platte ausgeübt werden.

Eine vorzugsweise Ausgestaltung besteht darin, daß in dem äußeren Teil des Druckgehäuses eine Zuleitung für ein gasförmiges Druckmittel und eine Ableitung für gasförmiges Druckmittel angeordnet sind. Dadurch kann die erforderliche Kraft auf die Platte in besonders einfacher Weise ausgeübt werden.

Eine vorzugsweise Ausgestaltung besteht darin, daß die Ableitung für gasförmiges Druckmittel aus dem äußeren Teil des Druckgehäuses mit dem System verbunden ist. Wenn eine geringe Menge an Gas aus dem Druckgehäuse durch die Ableitung in das System strömt, ist sichergestellt, daß die auf die Platte entgegen der Förderrichtung wirkende Kraft größer ist als die vom Druck im System auf die Platte in Förderrichtung wirkende Kraft. Dabei muß die Fläche der Membran etwas größer sein als die Fläche der Platte, auf die der Druck im System wirken kann. Dadurch kann die als Gegendruck erforderliche Kraft in sehr einfacher Weise erzeugt und geregelt werden.

Eine vorzugsweise Ausgestaltung besteht darin, daß der Materialaustritt aus dem Austragsschenkel in ein koaxiales Rohr mündet, das Rohr mit einer Öffnung ausgestattet ist, die Kolbenstange durch diese Öffnung geführt wird, und die Öffnung durch eine um die Kolbenstange angeordnete Dichtung verschlossen ist. Das koaxiale Rohr erstreckt sich etwas höher als der Materialaustritt des Austragsschenkels und ist an diesem Ende durch eine Membran abgedichtet. Das mit dem Fördergas ausgetragene Material wird durch den zwischen dem Austragsschenkel und dem koaxialen Rohr gebildeten ringförmigen Raum nach unten transportiert. Diese Ausführung ergibt eine besonders einfache und sichere Ausgestaltung.

0159751

Die Erfindung wird anhand von Figuren näher erläutert.

Fig. 1    ist ein Querschnitt durch eine Austragsvorrichtung
          mit einem nach oben gerichteten Materialaustritt,
          wobei der Anschluß an das System und der Austragsraum
          nicht dargestellt sind.

Fig. 2    zeigt schematisch eine Austragsvorrichtung mit
          seitlichem Materialaustrag und Anschluß an das System
          und den Austragsraum.

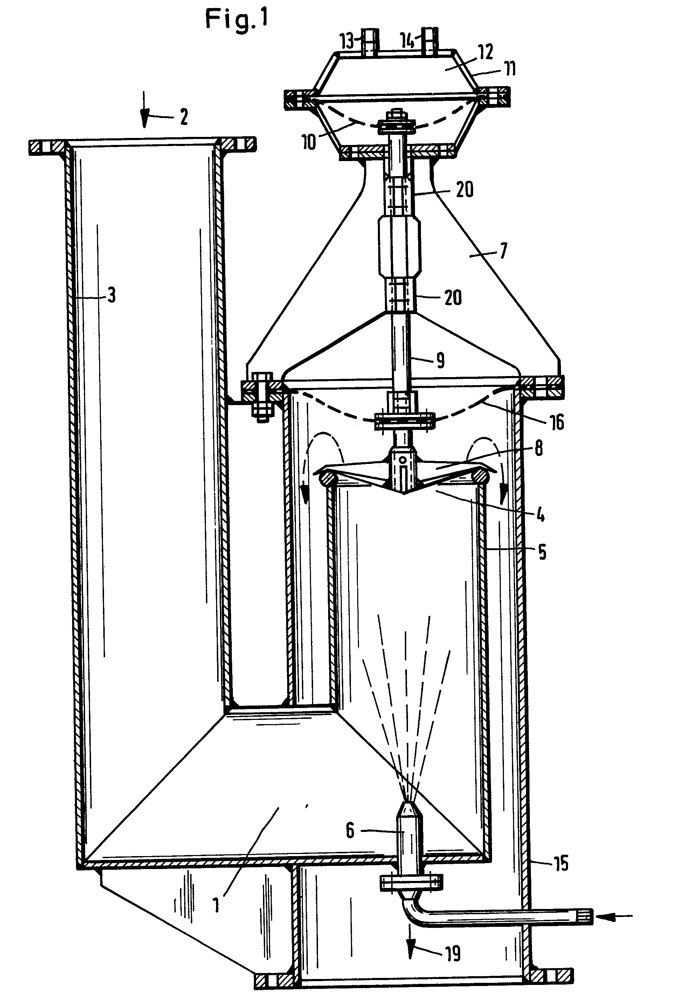

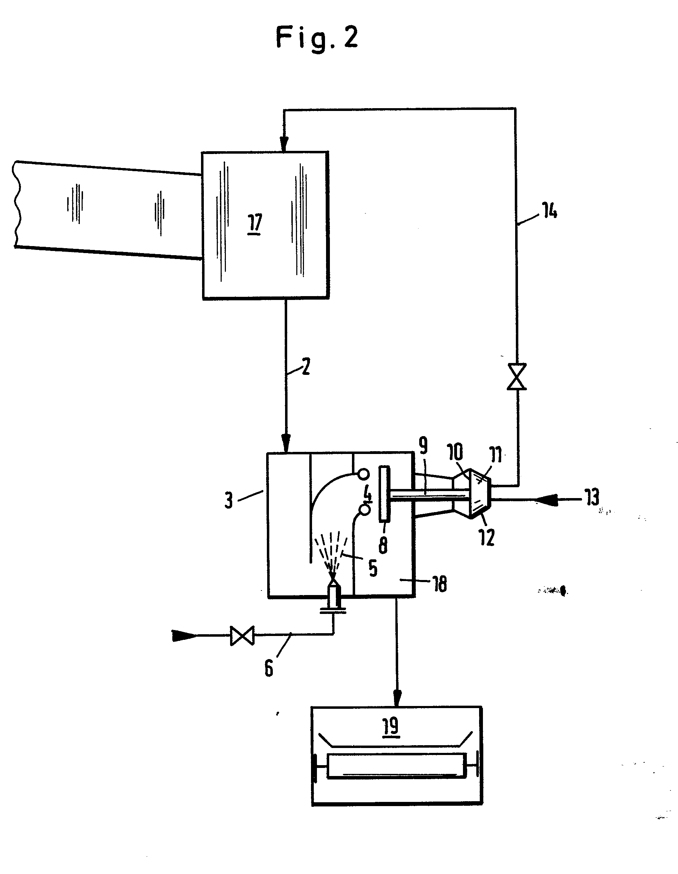

Die Austragsvorrichtung besteht aus einem U-förmigen Tauchverschluß 1, dessen Einlaufschenkel 3 durch eine Materialzuleitung 2 (in Fig. 1 nur durch einen Pfeil dargestellt) mit einem
System 17 (Fig. 2) verbunden ist. Der Austragsschenkel 5 hat
einen Materialaustritt 4, der in Fig. 1 nach oben und in Fig.
2 zur Seite gerichtet ist. In Fig. 1 wird das Material mit dem
Fördergas in den ringförmigen Raum zwischen dem Austragsschenkel 5 und dem koaxialen Rohr 15 ausgetragen und in Fig. 2 in
den seitlichen Raum 18 ausgetragen. Anschließend gelangt es in
den Aufnahmeraum 19, der in Fig. 2 aus einem Förderband besteht, und der einen niedrigeren Druck aufweist als das System
17. Im Boden des Tauchverschlusses ist eine Düse als Zuleitung
6 für das Fördergas angeordnet. Die Verschlußvorrichtung 7 für
den Materialaustritt 4 besteht aus einer Platte 8, die an
einer beweglichen Kolbenstange 9 befestigt ist. Die Kolbenstange 9 ist an einer Membran 10 befestigt, die in einem
Druckgehäuse 11 angeordnet ist. Im äußeren Teil 12 des Druckgehäuses 11 sind eine Zuleitung 13 und eine Ableitung 14 für
ein gasförmiges Druckmittel angeordnet.

In Fig. 1 wird die obere Öffnung des koaxialen Rohres 15 durch
eine Membran als Dichtung 16 verschlossen, die gasdicht um die
Kolbenstange 9 angeordnet ist. Die Kolbenstange 9 wird durch
das Lager 20 geführt. Der Materialaustritt 4 ist durch die

0159751

Platte 8 verschlossen. Wenn durch die Düse 6 Förderluft eingeleitet wird (gestrichelt dargestellt), wird die Platte 8 angehoben und das Material tritt mit der Förderluft aus dem
Materialaustritt 4 in den ringförmigen Raum zwischen Austragsschenkel 5 und koaxialem Rohr 15 (gestrichelte Pfeile).

In Fig. 2 wird durch die Zuleitung 13 so viel Luft in den
äußeren Teil 12 des Druckgehäuses 11 eingeleitet, daß eine
geringe Luftmenge durch Ableitung 14 in das System 17 strömt.

Patentansprüche

1. Vorrichtung zum Austragen von feinkörnigem Material aus einem System mit höherem Druck in einen Aufnahmeraum mit niedrigerem Druck, bestehend aus einem U-förmigen Tauchverschluß (1), einer Materialzuleitung (2) von dem System mit höherem Druck zu dem Einlaufschenkel (3) und einem Materialaustritt (4) aus dem Austragsschenkel (5) des U-förmigen Tauchverschlusses (1) in den Aufnahmeraum mit niedrigerem Druck, und einer Zuleitung (6) für Fördergas in das Material im unteren Teil des Tauchverschlusses (1), dadurch gekennzeichnet, daß der Austragsschenkel (5) kürzer ausgebildet ist als der Einlaufschenkel (3), eine Verschlußvorrichtung (7) zum Öffnen und Schließen des Materialaustritts (4) des Austragsschenkels (5) angeordnet ist, und die Verschlußvorrichtung (7) mit einer gegen die Förderrichtung wirkenden Kraft ausgestattet ist, die etwas größer ist als die Kraft, die vom Druck im System auf die Verschlußvorrichtung in Förderrichtung ausgeübt wird.

2. Vorrichtung nach Anspruch 1, dadurch gekennzeichnet, daß die Verschlußvorrichtung (7) aus einer Platte (8) besteht, die den Materialaustritt (4) verschließt, und die Platte (8) an einer beweglichen Kolbenstange (9) befestigt ist.

3. Vorrichtung nach Anspruch 2, dadurch gekennzeichnet, daß die Kolbenstange (9) an einer Membran (10) befestigt ist , die Membran (10) in einem Druckgehäuse (11) angeordnet, und in den äußeren Teil (12) des Druckgehäuses (11) ein Druckmittel eingeleitet wird.

4. Vorrichtung nach Anspruch 2, <u>dadurch gekennzeichnet</u>, daß in dem äußeren Teil (12) des Druckgehäuses (11) eine Zuleitung (13) für ein gasförmiges Druckmittel und eine Ableitung (14) für gasförmiges Druckmittel angeordnet sind.

5. Vorrichtung nach Anspruch 4, <u>dadurch gekennzeichnet</u>, daß die Ableitung (14) für gasförmiges Druckmittel aus dem äußeren Teil (12) des Druckgehäuses (11) mit dem System verbunden ist.

6. Vorrichtung nach einem der Ansprüche 2 bis 5, <u>dadurch gekennzeichnet</u>, daß der Materialaustritt (4) aus dem Austragsschenkel (5) in ein koaxiales Rohr (15) mündet, das Rohr (15) mit einer Öffnung ausgestattet ist, die Kolbenstange (9) durch diese Öffnung geführt wird, und die Öffnung durch eine um die Kolbenstange (9) angeordnete Dichtung (16) verschlossen ist.

**Fig.1**

# Fig. 2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | US-A-2 833 622 (E.J.ROBERTS u.a)<br>* Spalte 4, Zeilen 17-25; Abbildung, Verweisungszeichen 61,61' * | 1 | B 01 J 3/02<br>B 65 G 53/14 |
| D,Y | DE-C- 915 199 (HEINRICH KOPPERS)<br>* Seite 1, Zeilen 1-11; Seite 2, Zeilen 11-35, 58-100; Abbildung 1 * | 1 | |
| A | US-A-2 816 803 (R.D.CLARK u.a.)<br>* Spalte 6, Zeilen 19-26; Abbildung 1, Verweisungszeichen 20,30,32 * | 1,6 | |
| A | EP-A-0 011 151 (WERNER & PFLEIDERER)<br>* Zusammenfassung; Seite 1, Zeilen 1-9; Seite 4, Zeile 32 - Seite 5, Zeile 19; Seite 5, Zeile 32 - Seite 6, Zeile 14; Abbildungen 1,2 * | 2,3 | RECHERCHIERTE SACHGEBIETE (Int. Cl.4)<br><br>B 01 J<br>B 65 G<br>F 16 K |

Der vorliegende Recherchenbericht wurde für alle Patentansprüche erstellt.

| Recherchenort | Abschlußdatum der Recherche | Prüfer |
|---|---|---|
| DEN HAAG | 26-06-1985 | SIEM T.D. |